# EUROPEAN PATENT SPECIFICATION

(11) **EP 0 577 733 B1**
(45) Date of publication and mention of the grant of the patent: **15.05.1996**
(21) Application number: 92909907.5
(22) Date of filing: 09.03.1992
(51) Int. Cl.: C04B 35/00, C04B 35/66, C04B 26/12, B22C 1/22, C08K 5/15

(54) **VIBRATABLE RESIN-BONDED REFRACTORY COMPOSITION**
VIBRATIONSFÄHIGE HARZGEBUNDENE FEUERFESTZUSAMMENSETZUNG
COMPOSITION REFRACTAIRE AGGLOMEREE ET RENDUE FLUIDE PAR LES VIBRATIONS

(30) Priority: 27.03.1991 US 686579
(43) Date of publication of application: 12.01.1994
(73) Proprietor: MINTEQ INTERNATIONAL INC., New York, New York 10174-1901 (US)
(72) Inventor: GRIFFIN, Richard, C., Mount Bethel, PA 18343 (US)
(74) Representative: Baillie, Iain Cameron
(86) International application number: US9201604
(87) International publication number: WO9217419

(56) References cited:
- EP-A- 0 158 895
- EP-A- 0 202 004
- EP-A- 0 338 174
- WO-A-91/17969
- GB-A- 2 154 593
- GB-A- 2 216 117
- US-A- 4 426 467

## Description

### Background of the Invention

This invention relates to a vibratable refractory composition, composed in bulk of refractory grains of one or more of magnesia, doloma, alumina, alumina silicates, and magnesia-alumina spinel, bonded with a liquid resol-phenolic eater- cured resin and to a method for its preparation. Refractory articles produced from this composition exhibit high flexural and compressive strengths in both the green and cured states, allowing for the casting of complex forms. The high temperature application of this composition creates a carbon based refractory for use in reducing- or inert-atmosphere situations. The carbon base of the sintered product is especially suited to non-wetting surfaces for superior performance in resisting steel and slag penetration in the ferrous industries.

The use of resin-bonding to make refractory compositions that flow under the application of vibration and that therefore can be used to form large or complex shapes has been under development for several years. Typical resins have been phenol, furan and urea for use in thermocurable products, or polyethylene, polypropylene, polyvinyl alcohol, petroleum resins or tar pitch for use in thermoplastic set products. All of these products have required temperatures of 100-300°c to cure the resins.

To achieve a more universal product it is necessary to be able to cure the resin-bonded product at room temperature. Subsequent development has led to the use of resorcinol-formaldehyde resin or phenol modified resorcinol-formaldehyde resin. This work is noted in Japanese Patent No. 56-164067, in which the extremely high reactivity with formaldehyde, which allows such resins to easily be cured at room temperature, is disclosed. This reaction is, however, severely inhibited by the presence of water or hydroxyl active organic additives.

Other ambient temperature cure systems have been described in, for example U.S. Patent 4,426,467 and British Patent 2154593 which describe refractory compositions comprising a liquid resol resin and an activator in addition to an aggregate.

Other types of organic, normal-temperature curable binders have been used for foundry applications and porous refractories, particularly sand molds and cores. These have included resol-type phenol resins, urea resins, furan-modified urea resins and furan resins. These resins can be used in an aqueous medium, or they typically use solutions containing hydrochloric acid, sulfuric acid, phosphoric acid, benzenesulfonic acid, toluenesulfonic acid, xylenesulfonic acid, etc. as curing agents. A major problem with this approach is the need for neutral or acid refractory grain to avoid reaction with the acid based activator.

A major limitation of these systems is that they are not appropriate for use in magnesia or dolomitic refractory products.

The major features of the conventional resin systems currently in use have significant limitations. The acid activated resins are limited in the refractory grain chemistry with which they are compatible, the thermosetting resins cannot cure at normal room temperatures, and the resorcinol-formaldehyde resins are not only incompatible with water, a limitation in normal industrial cleaning and production techniques, but represent a significant health hazard due to the suspected carcinogenic rating of the necessary formaldehyde component.

Heretofore, compositions in which a dry, powdered solid resol-phenolic resin is combined with a refractory aggregate have been prepared, however, they have proven unsatisfactory in refractory service because use of a dry solid resin does not result in a high density, high strength product.

### Summary of the Invention

I have discovered that quite unexpectedly the use of a liquid resol-phenol ester-curable resin for producing resin-bonded refractory products overcomes all of the limitations noted above. The resin does not contain any component which exhibits adverse effects on the refractory composition or interacts with the refractory composition in a way that inhibits set or cure properties. The resin can be utilized with various refractory reinforcements (e.g., acidic refractory materials, neutral refractory materials, basic refractory materials, graphite refractory materials, non-oxidized refractory materials, etc.). The use of a liquid resol-phenolic ester-cured resin as a binding material on a refractory aggregate results in a refractory composition that has high density and high strength properties, which enable its use in high temperature service.

This invention is for an ester-curable, resin bonded refractory composition, which is curable at ambient temperature. The essential requirements for this product consist of a refractory aggregate, which can be acid, basic or neutral as defined by refractory practice, and a liquid ester-curable resol-phenol resin that is miscible with water. This composition is designed to form complex shapes by flowing under vibration. The particle size distribution of the refractory aggregate and any other particulate additives are carefully controlled to allow a continuous distribution that will flow under vibration with the minimum liquid requirement and pack under the vibration effect to form with the lowest porosity possible.

According to the present invention, a castable refractory product can be formed under vibration from a composition containing various refractory reinforcements (e.g., acidic refractory materials, neutral refractory materials, basic refractory materials, graphite refractory materials, non-oxidized refractory materials), with the addition of metal powders as an anti-oxidant (aluminum, aluminum-silicon alloy, silicon, magnesium-aluminum alloy) and utilizing a resol-phenolic ester-curable resin/water system. This refractory product is more compatible with traditional water based manufacturing processes, allows the use of all existing refractory grade materials, and significantly reduces the health hazard of the manufacturing of resin bonded shapes by reducing the formaldehyde content to trace or essentially zero levels.

The composition produces a vibratable refractory castable, with physical properties comparable to resin-bonded refractory brick formed through isostatic pressing, when dried to remove all volatiles, at 100-300°C. However, the castable exhibits superior strength when tested at 1400°C, using a hot modulus of rupture in a nitrogen atmosphere, when cast with zero loading or graphite compared to a 25% by weight, graphite containing pressed brick.

### Detailed Description of the Invention

While not wishing to be limited to a particular theory, it is believed that use of a liquid resin, in place of a dry, solid resin, enables the resin material to flow more readily into the interstices between aggregate particles, resulting in a more homogenous mixture of resin and aggregate. This, in turn, allows for a more dense packing of the aggregate and the formation of closer bonds between adjoining resin-coated aggregate particles, which gives the composition of the present invention its higher density and greater strength, thereby enabling its use in high temperature refractory service. A further advantage of the use of a liquid resin is that it is now feasible to cure the resin at ambient temperature through use of an activating agent which catalyzes the resol-phenolic resin's polymerizing reaction with an ester which cures and hardens the resin, rather than having to cure the resin at high temperature in order to cause it to harden and set, as is necessary with a solid resin. Activating agents are not effective in catalyzing the curing of solid resins principally because of the difficulty in achieving homogeneous mixing of components in a dry resin based system. Catalyzation of the curing of a liquid resin with an ester hardening agent is accomplished by the use of an alkaline earth oxide, such as refractory grade reactive magnesia, having a specific surface area of from about 30-120 mg⁻¹, as the activating agent to promote the phenolic-ester polymerization reaction.

Alternatively, the liquid resin of compositions of the present invention can be cured in the conventional manner at elevated temperature in the absence of an activating agent. The ability to cure the resin at ambient temperature through the use of an activating agent is, however, a tremendous energy saving and flexibility enhancing feature of the present invention.

The use of the liquid resol-phenol ester resin system also allows the presence of water with which the resin is fully compatible. The use of water does not inhibit the setting or curing properties of the resin-refractory mix. It does, however, significantly further improve the particle packing of the resin-refractory composition beyond the level at which use of a liquid resin alone is already a major improvement over use of a dry solid resin. Consequently, when used in this system the incorporation of the optimum ratio of resin to water not merely enhances production clean up and cost (diluent for flow), but by improving packing, creates a superior hot strength refractory due to sintering of more grain to grain contact, and oxidation resistance due to lower porosity.

The resol-phenol ester cure system does not require the presence of formaldehyde to develop the bonding properties. The resin is designed to have a zero formaldehyde content. Although the presence of formaldehyde does not affect the bonding properties, the absence of formaldehyde significantly improves the safety of these materials during the production of refractory shapes.

The composition gives the highest strength possible at ambient curing conditions. In order to promote the greatest strengths at service temperatures of 1400 to 1700°C, the addition of fine metal powders is made to the composition. The use of alumina, magnesium-aluminum alloy, silicon, and aluminum-silicon alloy powders provides anti-oxidation effects to protect the carbon formed in the matrix. The use of these metal powders increases the Hot Modulus of Rupture ("HMOR") of carbon based refractory products. The preferred metal for use in this composition is the aluminum-silicon alloy. The aluminum reacts with the amorphous carbon formed from the resin to produce Al₄C₃, aluminum carbide. This phase is present at temperatures in the range of 1000-1400°C, but is unstable at temperatures greater than 1400°C. At temperatures greater than about >1500°C, however, the silicon metal forms SiC, silicon carbide phases. This alloy creates a continuous series of bonding phases which promotes the hot strength of the shaped refractory product.

Addition of graphite and/or silicon carbide can be made to the composition to provide increased non-wetting characteristics which protect the refractory from steel and slag penetration.

One significant aspect of this invention lies in the use of a liquid ester-curable resin, which is curable at ambient temperature. The resin of choice is a liquid resol-phenolic, such as Durite RL-489A, containing 10-20% free phenol, curable by use of an ester, such as butyrolactone, alone or combined with tetraethyl orthosilicate. Of prime importance in this resin is the lack of need for free formaldehyde to promote bond formation. The preferred form of the liquid resol-phenol resin contains a substantial amount (from about 78 to about 88 weight percent) of a phenol-formaldehyde polymer, from about 10 to about 20 weight percent of free phenol and about 2 weight percent of a sodium salt of phenol-formaldehyde, and only a trace presence of non-essential free formaldehyde. The optimum concentration of free formaldehyde is substantially zero (below detectable limits <0.01%).

The importance of using a resin containing very low levels or zero free formaldehyde is reflected in the exposure levels of ACGIH TLV at 1 ppm. Consequently, the ability to form refractory castables at the processing level which does not expose workers to free formaldehyde represents a major improvement. Although the liquid resol-phenolic resin of the present invention can be used alone to bind with the refractory aggregate, a further significant improvement in the composition is made by the addition of water. Normally, the use of water in organic compositions acts as a diluent or inhibits the reaction; however, when used in the correct ratio with the resin of this invention the effect is to increase the flow (Table 1) and to increase the compressive strength of the cured refractory (Table 2).

**Table 1:**

| Data for the % Slump of Resin/Water/Aggregate Mix Based Upon 50 Taps Using a Flow Table as Specified in ASTM Designation C230. | | | |
|---|---|---|---|
| Sample | % Resin | % Water | % Slump |
| 1 | 8 | 0 | 18.27 |
| 2 | 6 | 2 | 35.40 |

As noted in Table 1, the flow of the refractory composition is increased by almost 100% with the substitution of 25% of the original resin level by water. It might be expected that the removal of the resin would be detrimental to the overall strength of the cured refractory composition, but this effect is negated by the improved packing, and in fact creates an increase in strength.

**Table 2:**

| Compressive Strength of the Cured Resin Bonded Refractory Composition Based Upon Varying the Ratio of Resin to Water | | | | | |
|---|---|---|---|---|---|
| Sample | % Resin | % Water | Ratio | Compressive Strength | |
| | | | | (psi) | (kPa) |
| 1 | 8 | 0 | | 10370 | 71550 |
| 2 | 6 | 2 | 3:1 | 14470 | 99840 |
| 3 | 5 | 3 | 1.66:1 | 9940 | 68590 |

The optimum resin:water ratio is 3:1, which gives a refractory composition of significantly greater compressive strength. The increase in compressive strength is a function of improved packing, which is supported by an increase in bulk density of the cast piece, from 169 pcf to 174 pcf (2700-2780 kg/m³). This is an important improvement for a refractory product, because such an increase in packing will create more grain to grain contact in the product, which promotes physical sintering of the product at the service temperature of 1400 to 1700°C, reduces erosion, and reduces carbon loss from oxidation.

The use of non-wetting ingredients such as graphite and/or silicon carbide, as slag penetration resistance agents in the invention, at levels up to 15%, can cause the introduction of air into the composition due to the hydrophobic nature of these materials trapping air against their surface when mixed in a water containing batch. The presence of this air lowers the packing density of the cured refractory product, reducing strengths at the cured stage and at service temperatures. The use of wetting aids and dispersants overcomes the hydrophobic effect of the graphite and silicon carbide additives. When the composition contains one or more such slag penetration resistance agents, the use of a wetting agent and a dispersant is required to overcome the hydrophobic effect of those additives, however, a wetting agent and/or dispersant may optionally be added to compositions of the present invention in any case, even when the composition does not contain slag penetration resistance agents, to further improve the wettability and flow characteristics of the composition. The improvement in physical properties by the use of the preferred dispersant, an ammonia salt of a sulfonated naphthalene condensate, and the preferred wetting aid, an alkyl naphthalene sulfonate, at levels of 0.05 to 1.5%, and 0.01 to 0.2% respectively, as a function of total solids, is noted in Table 3.

**Table 3:**

| Comparison of the Bulk Density of Vibrated Cast 9" x 2" x 2" (230 x 50 x 50 mm) Resin Bonded Refractory Containing Graphite, Both With and Without the Use of Dispersant (Ammonia Salt of Sulfonated Naphthalene Condensate) and Wetting Aid (Alkyl Naphthalene Sulfonate) | | | | | |
|---|---|---|---|---|---|
| Sample | % Graphite | Density w/o Additives | | Density w/ Additives | |
| | | (pcf) | (kg/m³) | (pcf) | (kg/m³) |
| 1 | 4 | 156 | 2496 | 169 | 2700 |
| 2 | 8 | 146 | 2336 | 157 | 2512 |
| 3 | 12 | 121 | 1936 | 152 | 2432 |

The effect of the dispersant/wetting aid in combination is to provide improved flow to the vibrating castable, while allowing the release of air from the mix. The preferred choice of dispersant and wetting aid allows the setting of the ester-phenolic bond to continue unhindered.

Another significant aspect of the invention is that the ester-phenolic bond formation is catalyzed by the use of an activating agent, such as an alkaline earth oxide, preferably light-burned, high reactivity magnesia, having a reactive surface area of from about 30-120 mg⁻¹. The use of the alkaline earth oxide activating agent is important to the invention in that it catalyzes the resol-phenolic-ester curing reaction so that hardening and setting of the resin occurs at a reasonable rate at ambient temperature, instead of requiring high temperature for curing. Moreover, the activating agent is compatible with acid, basic and neutral grades of refractory aggregates. The reactive surface area controls the rate of the polymerization of the ester-phenolic bonding, and consequently the working and setting time of the casting product. The preferred activating agent surface area range is from about 50-75 mg⁻¹. This range allows a working time of 15 min. to 2 hrs., by varying the amount of the activating agent added to the composition. The use of a lower surface area activating agent increases the addition level needed to provide the same catalytic effect, while the use of higher surface area activating agent limits the storage life of the reactant due to hydration effects.

In one preferred embodiment of a method of preparation of a preferred refractory composition according to the invention, a refractory aggregate mix consisting of sized fractions of magnesia, doloma, magnesia-alumina spinel, alumina, alumina-silicates or combinations of such aggregates (44.5-93.75% by weight) is blended with powdered metal particles of aluminum, magnesium-aluminum alloy, silicon, aluminum-silicon alloy or a combination of such metals (0-10% by weight). When graphite or silicon carbide or a mixture thereof in any ratio of graphite to silicon carbide (0-15% by weight) is to be added to the composition, the required amount of wetting aid, an alkyl naphthalene sulfonate, (0.05-0.2% by weight) is added to the water, (0-10% by weight), at a ratio of from 0 to 2:1 by weight, resin to water content, and the required dispersant, an ammonia salt of a sulfonated naphthalene condensate (0.05 to 1.2% by weight) is added to the liquid resol-phenolic resin, e.g., Durite RL-489A (5-20% by weight).

The water based solution and the resin/dispersant mix are combined, stirring until the mix is fully miscible. To this mix, graphite (0-15% by weight), silicon carbide (0-15% by weight), or a combination of graphite and silicon carbide, in any weight ratio, (0-15% by weight) is added, and stirred until the powders are fully wet. The resin based mix is then added to the refractory aggregate mix in a high intensity mixer, such as a Hobart® or Eirich® unit, and mixed for 2-5 minutes. After completion of this step, the required amount of ester, such as butyrolactonetetraethyl orthosilicate mixture, e.g., Durite #RC-546A (0.75-3.0% by weight) is added to the mixer, while continuing to mix.

This second stage of the mixing continues for 2-5 minutes, at which time the amount of alkaline earth oxide activation agent, such as light-burned magnesia, having a specific surface area of 50-75 mg⁻¹ (0.5-5% by weight) is added, and mixed for an additional 2-5 minutes.

On completion of the mixing step, the resin-aggregate composition is charged to a mold or unshaped area, with the application of vibration by the use of vibrating pencils or platforms, creating flow to fill the mold or unshaped area and create a dense refractory body. The finished body is allowed to set for 0.5-24 hrs., depending upon levels of activator, size of shape or physical constraints. After the required time period, the mold is stripped and the product air-cured for 12-24 hrs. The resin bonded refractory product is tempered to remove water and organic volatiles at 100 to 160°C, until all weight loss from removal of volatiles has ceased.

The preferred range for the level of refractory aggregate in compositions of the invention is from 64.2% to 93.75 by weight, the greater amount of refractory grain increasing the erosion resistance and sintered strength of the composition at service temperatures.

The preferred range for the level of resin used in compositions of the invention is from 5 to 10% by weight. Higher amounts of liquid are only removed in the drying procedure, creating greater porosity undesirable from strength and oxidation resistance properties. The level of ester hardening agent, such as a mixture of butyrolactone and tetraethyl-orthosilicate, e.g., Durite RC-546A, is proportional to the resin. The preferred range is from 0.75 to 1.5% by weight.

When water is present in the composition, that is, when the resin is utilized as an aqueous mixture, the water is in an amount of up to 10% by weight of the total composition. The water, when utilized, in combination with the liquid resin, provides a total liquid volume in the composition which gives the composition its flow characteristics and affects the strength of the composition; the higher the total liquid content, the lower the strength. There is an optimum point in the ratio of resin to water (expressed as a weight ratio) for the total liquid volume of resin and water added to the aggregate with respect to the strength, packing and porosity properties of the composition. The amount of water added can be as much as is needed to constitute a resin to water ratio, on a weight basis, of as low as 2:1. The preferred level of water addition, however, is such as to constitute a 3:1 weight ratio of resin to water for the total amount of liquid.

The preferred metal additive is aluminum-silicon alloy, at a preferred level of addition from 2-6% by weight, dependent upon the hot strength requirements of the application. Levels up to 6% give greater Hot Modulus of Rupture strengths at 1400°C.

The preferred range for the addition of graphite and/or silicon carbide slag penetration resistance agent as used in this invention is from 0 to 8% by weight. The level of the graphite and/or silicon carbide is determined by the requirements of the refractory application with regards to non-wetting characteristics of the steel or other molten metal contact.

The level of dispersant is a function of the dispersible fines present in the powder mix. The preferred level is from 0.05 to 0.5% by weight of the total composition. The use of a dispersant is required only when graphite and/or silicon carbide is used in the composition.

The preferred range of the wetting aid is from 0.01-0.05% by weight of the total composition, and is required only upon the presence of graphite and/or silicon carbide in the composition.

The variations in the preferred embodiments of the invention are designed to produce a high density, low porosity, high strength body of a refractory grain-carbon composition for use in molten metal contact. The preferred application of this product is in areas of molten steel contact, under reducing or inert atmosphere conditions. The superior flow properties of the composition of this invention, while under vibration, allow complex shapes to formed. This in turn allows the product to replace pressed refractory grain-carbon compositions, which due to pressing limitations cannot form such shapes. The high strength of the preferred compositions is equivalent or greater in hot strength than commercial pressed refractory grain-carbon compositions.

The following non-limiting examples illustrate preferred embodiments of the process of the invention and the resulting refractory bodies.

### EXAMPLE 1

### Composition Utilizing Magnesia as the Refractory Aggregate

A dry mix of a 98% deadburned MgO (Grade 1) was placed in a mixing container by adding 1128.8g of 1/4 mesh sized fraction, 848.lg of 1/8 mesh sized fraction, 850.2g of fine grade (85% -60 mesh) and 930.5g of pulverized magnesia (95% -100 mesh). To this magnesia, 247.4g of aluminum-silicon fines, 90:10 grade, average particle size (Fisher) 5.1µm was added (Valimet, Inc.).

200 g of Durite RL 489A phenolic resin (Borden Chemical Co.) was placed in a plastic beaker. To this was added 66.7g of potable water. The resin-water mix was stirred with a spatula until fully miscible. Using a lab mixer (Model N-50, Hobart Corporation, Troy, NY) the dry mix was blended for two minutes. The mixture of resin and water was added to the aggregate while mixing, and the batch blended for five additional minutes. 30g of hardener, Durite RC 546A was then added to the mixer, and the batch blended for an additional five minutes. 30g of activator, light-burned magnesia, Magchem 50 (Martin Marietta Magnesia Specialties, Hunt Valley, Maryland), was added to the mixer, and the batch blended for an additional two minutes.

The resin-aggregate batch was removed from the mixer and charged to a metal 4-gang bar mold, each bar 9" x 2" x 2" (230 x 50 x 50 mm) in size. The mold was fixed to a Magnetek/Best vibrating platform. Using an initial vibration at 35 Hz while filling the mold, the vibration was increased to 40-50 Hz and held at that setting for three minutes. The composition set hard in 45 minutes, and the mold was stripped after one hour. The bars were then air-cured for 24 hours. The bars were then tempered at 160°c in a forced air dryer for 16 hours, to remove all volatiles. The physical properties of the tempered product are noted in Table 4.

**Table 4:**

| Physical Properties of Phenolic Bonded Magnesia 9" x 2" x 2" (230 x 50 x 50 mm) Tempered Bars | | | | | | | |
|---|---|---|---|---|---|---|---|
| Density | | MOR | | CCS | | HMOR (N₂) 1400°C | |
| (pcf) | (kg/m³) | (psi) | (kPa) | (psi) | (kPa) | (psi) | (kPa) |
| 178.3 | 2853 | 1440 | 9836 | 11766 | 81185 | 1579 | 10895 |

### EXAMPLE 2

### Composition Using a Non-Wetting Component (Graphite)

A dry mix of a 98% deadburned MgO (Grade 1) was placed in a mixing container by adding 931.3g of 1/4 mesh sized fraction, 699.7g of 1/8 mesh sized fraction, 701.5g of fine grade (85% -60 mesh) and 767.7g of pulverized magnesia (95% -100 mesh). To this magnesia, 204.1g of aluminum-silicon fines, 90:10 grade, average particle size (Fisher) 5.1µm was added.

89.0g of potable water was placed in a plastic beaker and 1.04 g of the wetting aid, Henkel Sellogen WL (Henkel Corporation, Ambler, PA) was added. 266.9g of Durite RL 489A phenolic resin (Borden Chemical Co.) was placed in a separate plastic beaker. To this was added 3.13g of dispersant, Henkel Coalmaster A-23-M (Henkel Corporation, Ambler, PA). The two solutions were combined into one beaker and the resin-water mix was stirred with a spatula until fully miscible. 155.0g of graphite, Ceylon #2124 (Asbury Graphite, Asbury, NJ) was added to the resin-water blend. using a lab mixer (Model N-50, Hobart Corporation, Troy, NY) the dry mix was blended for two minutes. The mixture of resin, water, and graphite was added to the aggregate While mixing, and the batch blended for five additional minutes. 40.0g of activator, light-burned magnesia, Magchem 50 (Martin Marietta Specialties, Hunt Valley, Maryland) was added to the mixer, and the batch blended for an additional two minutes.

The procedure for casting was followed as detailed in Example 1. The physical properties of the tempered product are noted in Table 5.

**Table 5:**

| Physical Properties of Phenolic Bonded Magnesia-Graphite 9" x 2" x 2" (230 x 50 x 50 mm) Tempered Bars | | | | | |
|---|---|---|---|---|---|
| Density | | MOR | | CCS | |
| (pcf) | (kg/m³) | (psi) | (kPa) | (psi) | (kPa) |
| 168.9 | 2783 | 1504.8 | 10383 | 7360.0 | 50784 |

### EXAMPLE 3

### Composition Utilizing Alumina-Silicate as the Refractory Aggregate

A dry mix of alumina and alumina-silicate calculated to create an 85% alumina product was prepared by placing in a mixing container 2100g of 6/10 mesh fraction, Duralum (Washington Mills), 1400g of -10 mesh fraction, Duralum, 1050g of -100 mesh fraction, Duralum, 700g of Mulcoa 60, -35 mesh fraction, (C.E. Minerals) and 1330g of Calcined Alumina C70 FB (Alcan). To this aluminosilicate mix, 420g of aluminum-silicon fines, 90:10 grade, average particle size (Fisher) 5.1µm was added (Valimet, Inc.). An addition of 140g of graphite #2491 (Asbury Graphite, Asbury, NJ).

630g of Durite RL-489A phenolic resin (Borden Chemical Co.) was placed in a plastic beaker, to this was added 210g of potable water. The resin water mix was stirred with a spatula until fully miscible. Using a lab mixer (Hobart Corporation, Troy, NY) the dry mix was blended for two minutes. The mixture of resin and water was added to the aggregate while mixing, and the batch blended for an additional two minutes. 95g of hardener, Durite RC-204 (Borden Chemical Co.) was then added to the mixer, and the batch blended for an additional two minutes. 140g of activator, light burned magnesia, Magchem 50 (Martin Marietta Magnesia Specialties, Hunt Valley, Maryland), was added the mixer and the batch blended for an additional two minutes.

The procedure for casting was followed as detailed in example 1. The physical properties of the tempered product are noted in Table 6.

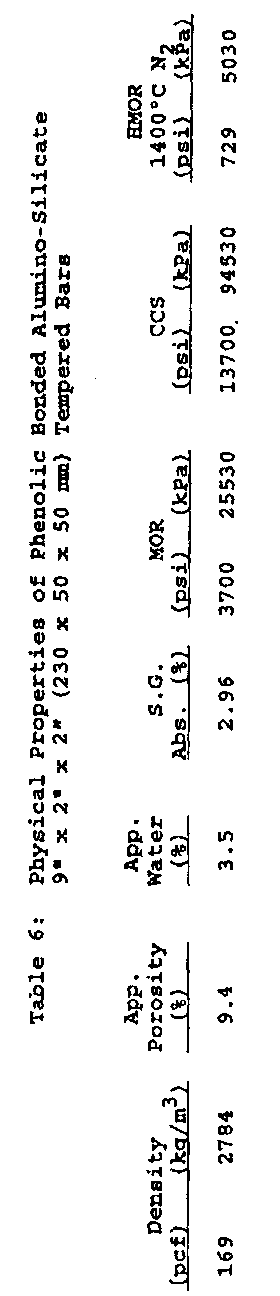

## Claims

1. A refractory composition containing a refractory aggregate selected from the group consisting of magnesia, doloma, alumina, alumina-silicates, magnesia-alumina spinel, and mixtures thereof, in an amount of at least 85 percent by weight of the total composition in combination with a liquid resol-phenolic ester-curable resin that contains from 78 to 88 percent by weight of phenol-formaldehyde polymer, from 10 to 20 percent by weight of free phenol, 2 percent by weight of a sodium salt of phenol formaldehyde, and less than 0.1 percent by weight of free formaldehyde, said resin being present in an amount of from 5 to 10 percent by weight of the total composition, and an ester in an amount of 0.5 to 3 percent by weight of the total composition.

2. The composition according to claim 1, further characterized in that the ester is butyrolactone or a mixture of butyrolactone and tetraethylorthosilicate.

3. The composition according to claim 1, further characterized by containing an activating agent for catalyzing a polymerization reaction between the resin and the ester, in an amount of from 0.5 to 5 percent by weight of the total composition.

4. The composition according to claim 3, wherein the activating agent is an alkaline earth oxide having a specific surface area of from 30 to 120 mg⁻¹.

5. The composition according to claim 4, wherein the alkaline earth oxide is light-burned magnesia.

6. The composition according to any of the preceding claims, further characterized in that the resin is an aqueous mixture, and the weight ratio of resin to water is greater than 2:1.

7. A refractory composition characterized by containing:
(a) from 44 to 94 percent by weight of the total composition of a refractory aggregate selected from the group consisting of magnesia, doloma, alumina, alumina-silicates, magnesia-alumina spinel, and mixtures thereof;
(b) from 5 to 10 percent by weight of the total composition of a liquid resol-phenolic ester-curable resin, containing from 78 to 88 percent by weight of the resin of phenol-formaldehyde polymer, from 10 to 20 peroent by weight of the resin of free phenol, 2 percent by weight of the resin of a sodium salt of phenol formaldehyde, and less than 0.1 *percent* by weight of the resin of free formaldehyde,
(c) from 0.5 to 3 percent by weight of the total composition of an ester;
(d) from 0 to 5 percent by weight of the total composition *of* a resin-ester polymerization activating agent, having a specific surface area of from 30 to 120 mg⁻¹,
(e) from 0 to 10 percent by weight of the total composition of an anti-oxidant metal powder selected from the group consisting of aluminum, silicon, magnesium-aluminum alloy, aluminum-silicon alloy, and mixtures thereof;
(f) from 0 to 15 percent by weight of the total composition of a slag-penetration resistance agent selected from the group consisting of graphite, silicon carbide, and mixtures thereof;
(g) from 0 to 0.2 percent by weight of the total composition of an alkyl naphthalene sulfonate wetting agent;
(h) from 0 to 1.5 percent by weight of the total composition of an ammonia salt of a sulfonated naphthalene condensate dispersant; and
(i) from 0 to 10 percent by weight of the total composition of water, such that when water is present, the weight ratio of resin to water is greater than 2:1.

8. The refractory composition according to claim 7, which is vibratable.

9. The refractory composition according to claim 7 or 8, further characterized in that the percent by weight of the total composition of activating agent is greater than 0 and the resin is curable at ambient temperature.

10. The composition according to claim 7, 8 or 9, further characterized in that the wetting agent is an alkyl naphthalene sulfonate and the dispersant is an ammonia salt of a sulfonated naphthalene condensate.

11. A refractory composition characterized by containing:
(a) at least 64 percent by weight of the total composition of a refractory aggregate selected from the group consisting of magnesia, doloma, alumina, alumina-silicates, magnesia-alumina spinel, and mixtures thereof;
(b) from 5 to 10 percent by weight of the total composition of a liquid resol-phenolic ester-curable resin, containing from 78 to 88 percent by weight of the resin of phenol-formaldehyde polymer, from 10 to 20 percent by weight of the resin of free phenol, 2 percent by weight of the resin of a sodium salt of phenol formaldehyde, and less than 0.01 percent by weight of the resin of free formaldehyde;
(c) from 0.75 to 1.5 percent by weight of the total Composition of an ester;
(d) from 0 to 5 percent by weight of the total composition of a resin-ester polymerization activating agent, having a specific surface area of from 50 to 75 mg⁻¹;
(e) from 2 to 6 percent by weight of the total composition of an anti-oxidant metal powder selected from the group consisting of aluminum, silicon, magnesium-aluminum alloy, aluminum-silicon alloy, and mixtures thereof;
(f) from 0 to 8 percent by weight of the total composition of a slag-penetration resistance agent selected from the group consisting of graphite, silicon carbide, and mixtures thereof;
(g) from 0.01 to 0.05 percent by weight of the total composition of an alkyl naphthalene sulfonate wetting agent;
(h) from 0.05 to 0.5 percent by weight of the total composition of an ammonia salt of a sulfonated naphthalene condensate dispersants and
(i) from 0 to 10 percent by weight of the total composition of water, such that when water is present, the weight ratio of resin to water is 3:1.

## Patentansprüche

1. Feuerfestzusammensetzung, enthaltend ein Feuerfestaggregat, ausgewählt aus der Gruppe, bestehend aus Magnesia, Calciumoxid, Aluminiumoxid, Aluminiumoxid-silicaten, Magnesia-Aluminiumoxid-Spinell und Mischungen davon, in einer Menge von mindestens 85 Gewichtsprozent der gesamten Zusammensetzung in Kombination mit einem flüssigen resolphenolischen, esterhärtbaren Harz, welches enthält: 78 % ...88 Gewichtsprozent Phenol-Formaldehyd-Polymer, 10 % ... 20 Gewichtsprozent freies Phenol, 2 Gewichtsprozent eines Natriumsalzes von Phenol-Formaldehyd und weniger als 0,1 Gewichtsprozent freies Formaldehyd, wobei das Harz in einer Menge von 5 % ... 10 Gewichtsprozent der gesamten Zusammensetzung und ein Ester in einer Menge von 0,5 % ... 3 Gewichtsprozent der gesamten Zusammensetzung vorliegen.

2. Zusammensetzung nach Anspruch 1, ferner dadurch gekennzeichnet, daß der Ester Butyrolacton oder eine Mischung von Butyrolacton und Tetraethylorthosilicat ist.

3. Zusammensetzung nach Anspruch 1, ferner dadurch gekennzeichnet, daß sie ein Aktivierungsmittel zum Katalysieren einer Polymerisationsreaktion zwischen dem Harz und dem Ester in einer Menge von 0,5 % ... 5 Gewichtsprozent der gesamten Zusammensetzung enthält.

4. Zusammensetzung nach Anspruch 3, bei welcher das Aktivierungsmittel ein Erdalkalioxid mit einer spezifischen Oberfläche von 30 ... 120 mg⁻¹ ist.

5. Zusammensetzung nach Anspruch 4, bei welcher das Erdalkalioxid ein leichtgebranntes Magnesia ist.

6. Zusammensetzung nach einem der vorgenannten Ansprüche, ferner dadurch gekennzeichnet, daß das Harz eine wässrige Mischung ist und das Gewichtsverhältnis von Harz zu Wasser größer ist als 2:1.

7. Feuerfestzusammensetzung, enthaltend:
(a) 44 % ... 94 Gewichtsprozent der gesamten Zusammensetzung ein Feuerfestaggregat, ausgewählt aus der Gruppe, bestehend aus Magnesia, Calciumoxid, Aluminiumoxid, Aluminiumoxid-silicaten, Magnesia-Aluminiumoxid-Spinell und Mischungen davon;
(b) 5 % ... 10 Gewichtsprozent der gesamten Zusammensetzung ein flüssiges, resolphenolisches, esterhärtbares Harz, welches enthält: 78 % ...88 Gewichtsprozent des Harzes Phenol-Formaldehyd-Polymer, 10 % ... 20 Gewichtsprozent des Harzes freies Phenol, 2 Gewichtsprozent des Harzes ein Natriumsalz von Phenol-Formaldehyd und weniger als 0,1 Gewichtsprozent des Harzes freies Formaldehyd;
(c) 0,5 % ... 3 Gewichtsprozent der gesamten Zusammensetzung ein Ester;
(d) 0 % ... 5 Gewichtsprozent der gesamten Zusammensetzung ein Aktivierungsmittel für die Harz-Ester-Polymerisation mit einer spezifischen Oberfläche von 30 ... 120 mg⁻¹;
(e) 0 % ... 10 Gewichtsprozent der gesamten Zusammensetzung ein Metallpulver als Antioxidans, ausgewählt aus der Gruppe, bestehend aus Aluminium, Silicium, Magnesium-Aluminium-Legierung, Aluminium-Silicium-Legierung und Mischungen davon;
(f) 0 % ... 15 Gewichtsprozent der gesamten Zusammensetzung ein Mittel gegen das Eindringen von Schlacke, ausgewählt aus der Gruppe, bestehend aus Graphit, Siliciumcarbid und Mischungen davon;
(g) 0 % ... 0,2 Gewichtsprozent der gesamten Zusammensetzung ein Alkylnaphthalinsulfonat als Benetzungsmittel;
(h) 0 % ... 1,5 Gewichtsprozent der gesamten Zusammensetzung ein Ammoniumsalz eines sulfonierten Naphthalinkondensats als Dispergiermittel; sowie
(i) 0 % ... 10 Gewichtsprozent der gesamten Zusammensetzung Wasser, so daß bei Anwesenheit von Wasser das Gewichtsverhältnis von Harz zu Wasser größer ist als 2:1.

8. Feuerfestzusammensetzung nach Anspruch 7, welche Feuerfestzusammensetzung schwingfähig ist.

9. Feuerfestzusammensetzung nach Anspruch 7 oder 8, ferner dadurch gekennzeichnet, daß der Anteil des Aktivierungsmittels an der gesamten Zusammensetzung in Gewichtsprozent größer ist als Null und daß das Harz bei Umgebungstemperatur härtbar ist.

10. Zusammensetzung nach Anspruch 7, 8 oder 9, ferner dadurch gekennzeichnet, daß das Benetzungsmittel ein Alkylnaphthalinsulfonat und das Dispergiermittel ein Ammoniumsalz eines sulfonierten Naphthalinkondensats ist.

11. Feuerfestzusammensetzung, enthaltend:
(a) mindestens 64 Gewichtsprozent der gesamten Zusammensetzung ein Feuerfestaggregat, ausgewählt aus der Gruppe, bestehend aus Magnesia, Calciumoxid, Aluminiumoxid, Aluminiumoxidsilicaten, Magnesia-Aluminiumoxid-Spinell und Mischungen davon;
(b) 5 % ... 10 Gewichtsprozent der gesamten Zusammensetzung ein flüssiges, resolphenolisches, esterhärtbares Harz, welches enthält: 78 % ...88 Gewichtsprozent des Harzes Phenol-Formaldehyd-Polymer, 10 % ... 20 Gewichtsprozent des Harzes freies Phenol, 2 Gewichtsprozent des Harzes ein Natriumsalz von Phenol-Formaldehyd und weniger als 0,01 Gewichtsprozent des Harzes freies Formaldehyd;
(c) 0,75 % ... 1,5 Gewichtsprozent der gesamten Zusammensetzung ein Ester;
(d) 0 % ... 5 Gewichtsprozent der gesamten Zusammensetzung ein Aktivierungsmittel für die Harz-Ester-Polymerisation mit einer spezifischen Oberfläche von 50 ... 75 mg⁻¹;
(e) 2 % ... 6 Gewichtsprozent der gesamten Zusammensetzung ein Metallpulver als Antioxidans, ausgewählt aus der Gruppe, bestehend aus Aluminium, Silicium, Magnesium-Aluminium-Legierung, Aluminium-Silicium-Legierung und Mischungen davon;
(f) 0 % ... 8 Gewichtsprozent der gesamten Zusammensetzung ein Mittel gegen das Eindringen von Schlacke, ausgewählt aus der Gruppe, bestehend aus Graphit, Siliciumcarbid und Mischungen davon;
(g) 0,01 % ... 0,05 Gewichtsprozent der gesamten Zusammensetzung ein Alkylnaphthalinsulfonat als Benetzungsmittel;
(h) 0,05 % ... 0,5 Gewichtsprozent der gesamten Zusammensetzung ein Ammoniumsalz eines sulfonierten Naphthalinkondensats als Dispergiermittel; sowie
(i) 0 % ... 10 Gewichtsprozent der gesamten Zusammensetzung Wasser, so daß bei Anwesenheit von Wasser das Gewichtsverhältnis von Harz zu Wasser größer ist als 3:1.

## Revendications

1. Composition réfractaire contenant un agrégat réfractaire choisi parmi la magnésie, la dolomie, l'alumine, des aluminosilicates, le spinelle magnésie-alumine et des mélanges de ceux-ci dans une quantité d'au moins 85 % en poids de la composition totale en combinaison avec une résine liquide de résol-phénolique réticulable par un ester qui contient de 78 à 88 % en poids de polymère de phénol-formaldéhyde, de 10 à 20 % en poids de phénol libre, de 2 % en poids d'un sel de sodium de phénol-formaldéhyde et moins de 0,1 % en poids de formaldéhyde libre, ladite résine étant présente dans une quantité de 5 à 10 % en poids de la composition totale et un ester dans une quantité de 0,5 à 3 % en poids de la composition totale.

2. Composition selon la revendication 1, caractérisée en outre en ce que l'ester est la butyrolactone ou un mélange de butyrolactone et d'orthosilicate de tétraéthyle.

3. Composition selon la revendication 1, caractérisée en outre en ce qu'elle contient un agent activant pour catalyser une réaction de polymérisation entre la résine et l'ester dans une quantité de 0,5 à 5 % en poids de la composition totale.

4. Composition selon la revendication 3, dans laquelle l'agent activant est un oxyde alcalino-terreux présentant une surface spécifique de 30 à 120 m/g.

5. Composition selon la revendication 4, dans laquelle l'oxyde alcalino-terreux est de la magnésie légèrement cuite.

6. Composition selon une quelconque des revendications précédentes, caractérisée en outre en ce que la résine est un mélange aqueux et en ce que le rapport massique de la résine à l'eau est supérieur à 2:1.

7. Composition réfractaire caractérisée en ce qu'elle contient :
a) de 44 à 94 % en poids de la composition totale d'un agrégat réfractaire choisi parmi la magnésie, la dolomie, l'alumine, des aluminosilicates, le spinelle magnésie-alumine et des mélanges de ceux-ci ;
b) de 5 à 10 % en poids de la composition totale d'une résine liquide de résol-phénolique réticulable par un ester contenant de 78 à 88 % en poids de la résine de polymère de phénol-formaldéhyde, de 10 à 20 % en poids de la résine de phénol libre, de 2 % en poids de la résine d'un sel de sodium de phénol-formaldéhyde et moins de 0,1 % en poids de la résine de formaldéhyde libre ;
c) de 0,5 à 3 % en poids de la composition totale d'un ester ;
d) de 0 à 5 % en poids de la composition totale d'un agent activant de polymérisation de résine-ester présentant une surface spécifique de 30 à 120 m/g ;
e) de 0 à 10 % en poids de la composition totale d'une poudre d'un métal antioxydant choisi parmi l'aluminium, le silicium, un alliage de magnésium-aluminium, un alliage d'aluminium-silicium et des mélanges de ceux-ci ;
f) de 0 à 15 % en poids de la composition totale d'un agent de résistance à la pénétration par des scories choisi parmi le graphite, le carbure de silicium et des mélanges de ceux-ci ;
g) de 0 à 0,2 % en poids de la composition totale d'un agent mouillant de sulfonate d'alkylnaphtalène ;
h) de 0 à 1,5 % en poids de la composition totale d'un agent dispersant de sel ammoniac de condensat de naphtalène sulfoné ; et
i) de 0 à 10 % en poids de la composition totale d'eau, de telle sorte que lorsque de l'eau est présente le rapport massique de la résine à l'eau est supérieur à 2:1.

8. Composition réfractaire selon la revendication 7, qui peut être soumise à des vibrations.

9. Composition réfractaire selon la revendication 7 ou 8, caractérisée en outre en ce que le pourcentage en poids de la composition totale d'agent activant est supérieur à 0 et en ce que la résine est réticulable à température ambiante.

10. Composition selon la revendication 7, 8 ou 9, caractérisée en outre en ce que l'agent mouillant est un sulfonate d'alkylnaphtalène et en ce que l'agent dispersant est un sel ammoniac de condensat de naphtalène sulfoné.

11. Composition réfractaire caractère caractérisée en ce qu'elle contient :
a) au moins 64 % en poids de la composition totale d'un agrégat réfractaire choisi parmi la magnésie, la dolomie, l'alumine, des aluminosilicates, le spinelle magnésie-alumine et des mélanges de ceux-ci ;
b) de 5 à 10 % en poids de la composition totale d'une résine liquide de résol-phénolique réticulable par un ester contenant de 78 à 88 % en poids de la résine de polymère de phénol-formaldéhyde, de 10 à 20 % en poids de la résine de phénol libre, de 2 % en poids de la résine d'un sel de sodium de phénol-formaldéhyde et moins de 0,01 % en poids de la résine de formaldéhyde libre ;
c) de 0,75 à 1,5 % en poids de la composition totale d'un ester ;
d) de 0 à 5 % en poids de la composition totale d'un agent activant de polymérisation de résine-ester présentant une surface spécifique de 50 à 75 m/g ;
e) de 2 à 6 % en poids de la composition totale d'une poudre d'un métal antioxydant choisi parmi l'aluminium, le silicium, un alliage de magnésium-aluminium, un alliage d'aluminium-silicium et des mélanges de ceux-ci ;
f) de 0 à 8 % en poids de la composition totale d'un agent de résistance à la pénétration par des scories choisi parmi le graphite, le carbure de silicium et des mélanges de ceux-ci ;
g) de 0,01 à 0,05 % en poids de la composition totale d'un agent mouillant de sulfonate d'alkylnaphtalène ;
h) de 0,05 à 0,5 % en poids de la composition totale d'un agent dispersant de sel ammoniac de condensat de naphtalène sulfoné ; et
i) de 0 à 10 % en poids de la composition totale d'eau, de telle sorte que lorsque de l'eau est présente le rapport massique de la résine à l'eau est de 3:1.
